# EUROPÄISCHE PATENTSCHRIFT

(11) **EP 4 075 397 B1**
(45) Veröffentlichungstag und Bekanntmachung des Hinweises auf die Patenterteilung: **06.05.2026**
(21) Anmeldenummer: 22162872.0
(22) Anmeldetag: 18.03.2022
(51) Int. Cl.: G06V 40/16

(54) **VERFAHREN ZUM IDENTIFIZIEREN EINER PERSON ANHAND EINES BIOMETRISCHEN GESICHTSMERKMALS MIT HILFE EINES MOBILEN GERÄTS UND MOBILES GERÄT**
MOBILE DEVICE AND METHOD FOR IDENTIFYING A PERSON USING A BIOMETRIC FACE FEATURE WITH THE AID OF A MOBILE DEVICE
PROCÉDÉ D'IDENTIFICATION D'UNE PERSONNE EN FONCTION D'UNE CARACTÉRISTIQUE BIOMÉTRIQUE FACIALE AU MOYEN D'UN APPAREIL MOBILE ET APPAREIL MOBILE

(30) Priorität: 14.04.2021 DE 102021109370
(43) Veröffentlichungstag der Anmeldung: 19.10.2022
(73) Patentinhaber: Bundesdruckerei GmbH, 10969 Berlin (DE)
(72) Erfinder: PETERS, Dr. Florian, 10437 Berlin (DE); GRIESER, Dr. Ralf, 10589 Berlin (DE)
(74) Vertreter: Bittner, Thomas L.

(56) Entgegenhaltungen:
- MR�CEK STEP�N ET AL: "Inspired by Bertillon -Recognition Based on Anatomical Features from 3D Face Scans", 20 May 2011 (2011-05-20), pages 1 - 6, XP093200477, Retrieved from the Internet <URL:https://ieeexplore.ieee.org/stamp/stamp.jsp?tp=&arnumber=6827717> [retrieved on 20240830]
- BUSCH C ET AL: "Towards a more secure border control with 3D face recognition", 19 November 2012 (2012-11-19), pages 49 - 60, XP055812087, Retrieved from the Internet <URL:https://www.christoph-busch.de/files/Busch-3DFace-nisk-121012.pdf>

## Beschreibung

Die Erfindung betrifft ein Verfahren zum Identifizieren einer Person anhand eines biometrischen Gesichtsmerkmals mit Hilfe eines mobilen Geräts und mobiles Gerät.

### Hintergrund

Es ist bekannt, Personen anhand von biometrischen Gesichtsmerkmalen zu identifizieren. Hierbei werden in einer Ausgestaltung aus zweidimensionalen Gesichtsbildern Gesichtsmerkmale abgeleitet, die mit Referenz- oder Vergleichsdaten verglichen werden, die Gesichtsvergleichsmerkmale angeben, um die Person zu identifizieren.

Gesichtserkennung bezeichnet hierbei allgemein die Analyse der Ausprägung sichtbarer Merkmale im Bereich des frontalen Kopfes, gegeben durch geometrische Anordnung und Textureigenschaften der Oberfläche des frontalen Kopfes. Zur Charakterisierung von Gesichtern werden sogenannte Landmarken verwendet, die sich auf charakteristische Positionen im Bereich des frontalen Kopfes beziehen. Landmarken als solche wurden untersucht und sind bekannt (vgl. zum Beispiel Luximon et al.: "The Chinese face: A 3D anthropometric analysis", Proceedings of the TMCE 2010, April 12 - 16, 2010, Ancona, Italy).

Häufig treten Probleme dabei auf, geeignete zweidimensionale Gesichtsbilder oder -abbildungen bereitzustellen. Beim Personalisieren von ID-Dokumenten (ID - Identifikation), beispielsweise in einem Bürger- oder Einwohnermeldeamt, werden die zweidimensionalen Gesichtsbilder als analoger Ausdruck bereitgestellt oder mit einer 2D-Kamera aufgenommen. Hierbei ist es häufig schwierig, verzerrungsfreie zweidimensionale Bilder bereitzustellen, die dann auch geeignet sind, aus den erfassten Bilddaten Gesichtsmerkmale für die biometrische Erkennung oder Identifizierung der Person zu bestimmen.

Um eine gewünschte Qualität der zweidimensionalen Bilder des Gesichts zu erreichen, werden Bildaufnahmeparameter definiert, beispielsweise Abstände zwischen Kamera und Person, Beleuchtung und Hintergrund sowie Eigenschaften der Kamera wie Auflösung, Verzerrung oder Farbtreue. Auch gibt es Vorgaben für weitere dem Erkennungszweck dienende Parameter wie beispielsweise Pose, Gesichtsausdruck, offene Augen und keine Verdeckung der Augen durch Frisur, Brille oder Kopfbedeckung. Es besteht somit ein hoher Aufwand, derartige für die biometrische Gesichtserkennung geeignete zweidimensionale Bildaufnahmen bereitzustellen.

Dokument DE 10 2011 004 787 A1 offenbart ein ID-Dokument zur Identifikation einer Person mit einer Abbildung einer ersten Ansicht der Person und einer Modellinformation, welche eine digitale Erfassung einer zweiten Ansicht der Person ermöglicht. Zum Identifizieren der Person ist vorgesehen, die zweite Ansicht über eine Anzeigeeinrichtung auszugeben, so dass eine Kontrollperson die erste Ansicht auf dem Identifikationsdokument und die zweiten Ansicht auf der Anzeigeeinrichtung vergleichen kann. Auch ein automatischer Abgleich der beiden Ansichten kann vorgesehen sein.

In BUSCH C ET AL: "Towards a more secure border control with 3D face recognition", PROCEEDINGS OF THE 5TH NORSK INFOMASJONS SIKKERHETS KONFERANSE (NISK); 19. November 2012 ist der Vergleich eines 3D face scan mit einem 2D reference image offenbart. Die 3D face scans umfassen biometrische Daten. Eine capture device wird verwendet, um Personendaten aufzunehmen. Ferner ist Analysieren eines 3D-Modells und Ableiten von Merkmalen (features) sowie Vergleichen derselben mit Referenzdaten offenbart; hierbei werden facial landmarks lokalisiert und als reference marks verwendet. Ferner ist eine 3D Face_ID Card offenbart. Die vorgenannten Mittel und Maßnahmen dienen der Identifizierung von Personen.

### Zusammenfassung

Aufgabe der Erfindung ist es, ein Verfahren zum Identifizieren einer Person anhand eines biometrischen Gesichtsmerkmals mit Hilfe eines mobilen Geräts sowie ein mobiles Gerät anzugeben, mit denen eine sichere und in verschiedenen Anwendungssituationen nutzbare Personenidentifizierung ermöglicht ist.

Zur Lösung sind ein Verfahren Identifizieren einer Person anhand eines biometrischen Gesichtsmerkmals mit Hilfe eines mobilen Geräts nach dem unabhängigen Anspruch 1 sowie ein mobiles Gerät nach dem unabhängigen Anspruch 14 geschaffen. Ausgestaltungen sind Gegenstand von abhängigen Ansprüchen.

Nach einem Aspekt ist ein Verfahren zum Identifizieren einer Person anhand eines biometrischer Gesichtsmerkmals mit Hilfe eines mobilen Geräts geschaffen, bei dem ein ID-Dokument mit einem Speicher für elektronische Daten bereitgestellt wird, wobei zum Personalisieren des ID-Dokuments für eine Person, welcher das ID-Dokument zugeordnet ist, in dem Speicher zumindest eine der folgenden Datenmengen gespeichert ist: Referenzwertdaten, welche einen Referenzwert für eine geometrische Beziehung für wenigstens zwei Landmarken der Gesichtserkennung in einem dreidimensionalen Referenzmodell für das Gesicht der Person anzeigen; Landmarkendaten, die Landmarken zur Gesichtserkennung in dem dreidimensionale Referenzmodell anzeigen und aus denen die Referenzwertdaten bestimmbar sind; und Modelldaten, die das dreidimensionale Referenzmodell repräsentierten und aus denen die Referenzwertdaten bestimmbar sind. Weiterhin ist Folgendes vorgesehen: Auslesen mindestens einer der Datenmengen aus dem Speicher des ID-Dokuments und Bereitstellen der Referenzwertdaten in mindestens einem Prozessor eines mobilen Geräts; Aufnehmen von aktuellen Bilddaten für das Gesicht der Person mit einer Bildaufnahmeeinrichtung des mobilen Geräts; Bestimmen eines aktuellen dreidimensionalen Modells für das Gesicht der Person unter Verwendung der aktuellen Bilddaten; Bestimmen von Vergleichsdaten aus dem aktuellen dreidimensionalen Modell, wobei die Vergleichsdaten einen Vergleichswert für den geometrischen Parameter für die wenigstens zwei Landmarken der Gesichtserkennung anzeigen, die in dem aktuellen dreidimensionalen Modell für das Gesicht bestimmt werden, und Bereitstellen der Vergleichsdaten in dem mindestens einen Prozessor des mobilen Geräts; und Identifizieren der Person, wenn mittels des mindestens einen Prozessors des mobilen Geräts bestimmt wird, dass der Vergleichswert innerhalb einer vorgegebenen Fehlertoleranz gleich dem Referenzwert ist.

Nach einem weiteren Aspekt ist ein mobiles Gerät zum Identifizieren einer Person anhand eines biometrischen Gesichtsmerkmals geschaffen, welches mindestens einen Prozessor, eine Datenkommunikationseinrichtung sowie eine Bildaufnahmeeinrichtung aufweist. Das mobile Gerät ist für Folgendes eingerichtet: Auslesen wenigstens einer Datenmenge aus dem Speicher eines ID-Dokuments, wobei die wenigstens eine Datenmenge zum Personalisieren des ID-Dokuments für eine Person, welcher das ID-Dokument zugeordnet ist, in dem Speicher gespeichert ist und zumindest eine der folgenden Datenmengen umfasst: Referenzwertdaten, welche einen Referenzwert für eine geometrische Beziehung für wenigstens zwei Landmarken der Gesichtserkennung in einem dreidimensionalen Referenzmodell für das Gesicht der Person anzeigen, Landmarkendaten, die Landmarken zur Gesichtserkennung in dem dreidimensionale Referenzmodell anzeigen und aus denen die Referenzwertdaten bestimmbar sind, und Modelldaten, die das dreidimensionale Referenzmodell repräsentierten und aus denen die Referenzwertdaten bestimmbar sind; Bereitstellen der Referenzwertdaten in dem mindestens einen Prozessor; Aufnehmen von aktuellen Bilddaten für das Gesicht der Person mit der Bildaufnahmeeinrichtung; Bestimmen eines aktuellen dreidimensionalen Modells für das Gesicht der Person unter Verwendung der Bilddaten; Bestimmen von Vergleichsdaten aus dem aktuellen dreidimensionalen Modell, wobei die Vergleichsdaten einen Vergleichswert für die geometrische Beziehung zwischen den wenigstens zwei Landmarken der Gesichtserkennung in dem aktuellen dreidimensionalen Modell für das Gesicht anzeigen, und Bereitstellen der Vergleichsdaten in dem mindestens einen Prozessor; und Identifizieren der Person, wenn mittels des mindestens einen Prozessors bestimmt wird, dass der Vergleichswert innerhalb einer vorgegebenen Fehlertoleranz gleich dem Referenzwert ist.

Es ist vorgesehen, im Speicher für elektronische Daten des ID-Dokuments eine oder mehrere Datenmengen zu speichern, die eine Bestimmung von Referenzwertdaten oder Referenzdaten für ein biometrisches Gesichtsmerkmal ermöglichen oder diese selbst umfassen, wobei das Speichern der einen oder der mehreren Datenmengen Teil eines Personalisierungsverfahrens des ID-Dokuments ist. Die Referenzwertdaten zeigen einen Referenzwert für zumindest einen geometrischen Parameter oder eine geometrische Beziehung betreffend wenigstens zwei Landmarken der Gesichtserkennung an, insbesondere einen geometrischen Parameter welcher Eigenschaften für eine oder mehrere Verbindungslinien zwischen den wenigstens zwei Landmarken anzeigt. Die Referenzwertdaten wurden von einem dreidimensionalen Referenzmodell oder einer dreidimensionalen Referenzrekonstruktion für das Gesicht der Person bestimmt, wobei das dreidimensionale Referenzmodell hinsichtlich seiner Konfiguration und Detailtiefe für eine Analyse oder Bestimmung von Merkmalen (Landmarken) zur biometrischen Gesichtserkennung eingerichtet ist. Sind im Speicher ID-Dokuments (nur) die Landmarkendaten gespeichert, die ihrerseits aus dem dreidimensionale Referenzmodell bestimmt sind, kann der die geometrische Beziehung betreffende Referenzwert (Referenzwertdaten) hieraus bestimmt werden, zum Beispiel derart, dass ein Abstandswert zwischen zwei Landmarken bestimmt wird, die durch die Landmarkendaten angezeigt werden, beispielweise anhand jeweiliger Positionsdaten im dreidimensionale Referenzmodell.

Das dreidimensionale Referenzmodell erfasst wenigstens den sichtbaren Bereich des frontalen Kopfes, kann aber auch als ganzes Kopfmodell gebildet sein. Zur Gesichtserkennung können an dem dreidimensionalen Referenzmodell Landmarken bestimmt werden, also Positionen ausgesuchter charakteristischer Punkte am Referenzmodell. Sodann wird für zwei oder mehr Landmarken ein geometrischer Parameter bestimmt, beispielsweise ein Abstand zwischen Landmarken.

Bei dem Verfahren zum Identifizieren werden die im Speicher des ID-Dokuments gespeicherten oder aus der / den dort gespeicherten Datenmenge(n) bestimmten Referenzwertdaten mit Vergleichsdaten verglichen, um die Person zu identifizieren, wenn der durch die Referenzwertdaten angezeigte Referenzwert und ein durch die Vergleichsdaten angezeigter Vergleichswert für den geometrischen Parameter betreffend die wenigstens zwei Landmarken innerhalb eines Fehlertoleranzbereichs übereinstimmen. Die Fehlertoleranz kann hierbei anwendungsabhängig gewählt werden, wie dies bei einem Vergleich eines Referenzwerts mit einem aus einer aktuellen Messung bestimmten Vergleichswert an sich üblich ist.

Die Vergleichsdaten werden hierbei aus einem aktuellen dreidimensionalen Modell oder einer aktuellen dreidimensionalen Rekonstruktion für das Gesicht der Person bestimmt, das / die unter Verwendung von Bilddaten zum Zwecke der aktuellen Personenidentifizierung ermittelt wird, wobei die Bilddaten vor deren Auswertung zum Bestimmen der Vergleichsdaten mit Hilfe einer Bildaufnahmeeinrichtung eines mobilen Geräts für die zu identifizierende Person, welche das ID-Dokument für die Identifizierung aktuell präsentiert oder vorlegt, aufgenommen wurden, insbesondere zum Zeitpunkt oder als Teil der Personenidentifizierung.

Das Verfahren unter Verwendung des mobilen Geräts und des ID-Dokuments mit der / den hierauf gespeicherten Datenmenge(n) ermöglicht eine effiziente und sichere Personenidentifizierung in unterschiedlichsten Anwendungssituationen, sei es beispielsweise bei einer Einreisekontrolle in ein Land oder bei der Zutrittsprüfung für ein Firmengelände. Vorteil ist es hierbei unter anderem, dass die Verwendung eines Werts (Referenzwert, Vergleichswert), der aus dreidimensionalen Modellen oder Rekonstruktionen bestimmt wird, weniger fehleranfällig als Messwerte ist, die bei der Gesichtserkennung auf Basis von zweidimensionalen Bildern erfolgt. Der anhand der Vergleichsdaten bestimmte Vergleichswert wird aktuell bei der Personenidentifizierung ermittelt, basierend auf den aktuell aufgenommenen Bilddaten für die Person, welcher das ID-Dokument zugeordnet und welche das ID-Dokument zur Personenidentifizierung vorlegt oder verwendet.

Das ID-Dokument kann insbesondere ein Ausweis-, Wert- oder Sicherheitsdokument sein, insbesondere ein hoheitliches Dokument, beispielsweise ein papierbasiertes und / oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte oder Firmenausweis oder anderes ID-Dokument wie Berechtigungsnachweis. In einer Ausgestaltung kann das ID-Dokument als eine Chipkarte ausgeführt sein.

Das Speichern der Datenmenge(n) in dem Speicher des ID-Dokuments kann erfolgen, bevor der Speicher, beispielsweise ein Chip oder ein Speicherbaustein, in einen Dokumentenkörper des ID-Dokuments integriert wird. Alternativ kann das Speichern der Datenmenge(n) vorgenommen werden, nachdem der Speicher in dem Dokumentenkörper aufgenommen ist.

Die wenigstens eine der Datenmengen kann mit Hilfe einer Datenkommunikationseinrichtung des mobilen Geräts, die mit dem mindestens einen Prozessor verbunden ist, aus dem Speicher des ID-Dokuments ausgelesen werden. Die Datenkommunikationseinrichtung des mobilen Geräts ist eingerichtet, die Datenmenge(n) direkt aus dem Speicher für die elektronischen Daten des ID-Dokuments auszulesen, sei es mittels kontaktloser und / oder kontaktbehafteter Datenübertragung. Somit kann das mobile Gerät selbst genutzt werden, um die Datenmenge(n) für die Personenidentifizierung in das mobile Gerät zu laden. Hierzu kann das mobile Gerät zum Beispiel eine Leseeinrichtung für Chip-Karten aufweisen, die ein kontaktloses und / oder kontaktbehaftetes Auslesen des Speichers ermöglicht.

Das aktuelle dreidimensionale Modell kann mittels des mindestens einen Prozessors lokal im mobilen Gerät bestimmt oder berechnet werden. Hierzu verfügt das mobile Gerät über eine geeignete Ausstattung an Software-Applikationen. Alternativ kann vorgesehen sein, dass das aktuelle dreidimensionale Modell für das Gesicht zumindest teilweise in einer externen Datenverarbeitungseinrichtung berechnet wird, mit der das mobile Gerät Daten austauschen kann, sei es über eine kabellose und / oder eine kabelgebundene Datenverbindung. Auf diese Weise ist es ermöglicht, in Ergänzung zur in dem mobilen Gerät verfügbaren Prozessor- oder Rechenkapazität externe Rechenleistung einzubeziehen, um das aktuelle dreidimensionale Modell zu bestimmen. In diesem Fall kann vorgesehen sein, dass die mit Hilfe des mobilen Geräts aufgenommenen und aktuelle Bilddaten an die externe Datenverarbeitungseinrichtung übermittelt werden und die elektronischen Daten für das aktuelle dreidimensionale Modell ganz oder teilweise von der externen Datenverarbeitungseinrichtung an das mobile Gerät übermittelt werden.

Die Vergleichsdaten können mittels des mindestens einen Prozessors lokal im mobilen Gerät bestimmt werden. Hier gelten die Erläuterungen betreffend der wahlweisen Verwendung einer externen Datenverarbeitungseinrichtung entsprechend. Die aus dem aktuellen dreidimensionale Modell zu bestimmenden oder abzuleitenden Vergleichsdaten können zumindest teilweise mittels der externen Datenverarbeitungseinrichtung bestimmt und dann von dieser an das mobile Gerät übermittelt werden.

Die wenigstens zwei Landmarken der Gesichtserkennung können zumindest eine der folgenden Landmarken umfassen: Position der Nasenspitze, Position Augensenke linkes Auge, Position Augensenke rechtes Auge, Position rechtes Ohr und Position linkes Ohr.

Grundsätzlich können beliebige Landmarken ausgewählt werden, um für diese ein oder mehrere geometrische Parameter oder Beziehungen zu bestimmen, insbesondere betreffend Verbindungslinien zwischen den ausgewählten Landmarken, für die dann die Referenzwertdaten im Speicher des ID-Dokuments hinterlegt werden. Bevorzugt werden Landmarken ausgewählt, die wenig fehleranfällig für unterschiedliche Messbedingungen beim Aufnehmen der Bilddaten mittels des mobilen Geräts und der anschließenden Berechnung des aktuellen dreidimensionalen Modells sind. Bei der Auswahl bevorzugter Landmarken können ein oder mehrere der folgenden Kriterien für Eigenschaften der Landmarken angewendet werden: geringe Dynamik über Mimik der Landmarke; hohe "Singularität" der Landmarke, zum Beispiel Nasenspitze, Senke bei den Augen neben der Nase oder dergleichen; lokale Minima oder Maxima; hohe Entropie der Landmarke über alle Menschen, also viel Information pro Pixel; hohe Varianz pro mm Länge und / oder pro Winkel, zum Beispiel Dreiecksform.

Die geometrische Beziehung für die wenigstens zwei Landmarken der Gesichtserkennung kann eine Beziehung aus der folgenden Gruppe angeben: Abstand zwischen zwei Landmarken; Winkel zwischen zwei Geraden, die jeweils einer Verbindungslinie zwischen zwei Landmarken entsprechen; und geometrische Form wie Dreieck, Kreis oder Viereck. Der geometrische Parameter oder die geometrische Beziehung kann Informationen betreffend eine geometrische Form für Verbindungslinien zwischen Landmarken anzeigen, beispielsweise eine Dreieck- oder Viereckform. Die geometrische Beziehung kann zum Beispiel einen Abstand zwischen der Position Augensenke links und der Position Augensenke rechts betreffen. Alternativ oder ergänzend können die Referenzwertdaten den Abstand zwischen der Position Augensenke links und der Position der Nasenspitze sowie zwischen der Position Augensenke rechts und der Position der Nasenspitze anzeigen.

Als mobiles Gerät kann ein Gerät aus der folgenden Gruppe verwendet werden: Mobiltelefon, Laptop-Computer, Tablet-Computer und Handscanner. Das mobile Gerät kann über eine oder mehrere lokal installierte Software-Applikationen eingerichtet sein, das aktuelle dreidimensionale Modell für das Gesicht der Person zu bestimmen, was es ermöglicht, das Modell lokal im mobilen Gerät zu berechnen, soweit dies für Bestimmung der Vergleichsdaten notwendig ist. Alternativ oder ergänzend kann eine externe Datenverarbeitungseinrichtung verwendet werden, um die Rechenprozesse auszuführen.

In dem Speicher können weitere Referenzwertdaten für ein weiteres biometrisches Gesichtsmerkmal gespeichert sein, die einen weiteren Referenzwert für eine weitere geometrische Beziehung zwischen wenigstens zwei Landmarken der Gesichtserkennung in dem dreidimensionalen Referenzmodell für das Gesicht der Person anzeigen. Es kann sich hier um die gleichen oder andere Landmarken handeln. Alternativ oder ergänzend können weitere Landmarkendaten auf dem ID-Dokument gespeichert sein, die eine Bestimmung des weiteren Referenzwerts ermöglichen.

Es kann vorgesehen sein, dass die Person nur dann identifiziert wird, wenn für mehrere Referenzwerte, die sich jeweils auf einen geometrischen Parameter zwischen Landmarken der Gesichtserkennung beziehen, Referenzwert und zugeordneter Vergleichswert innerhalb gleicher oder unterschiedlicher Toleranzbereiche übereinstimmen. Alternativ kann vorgesehen sein, dass die Übereinstimmung für nur einen Referenzwert ausreichend für das Identifizieren der Person ist. Die Erfindung sieht vor, dass die mehreren Referenzwerte gewichtete Referenzwerte sind und einer gewichteten Reihenfolge entsprechend nacheinander geprüft werden, wobei die Prüfungsreihenfolge abgebrochen wird, wenn für ein oder mehrere der Referenzwerte eine Übereinstimmung mit dem jeweils zugeordneten Vergleichswert aus dem aktuellen dreidimensionalen Modell innerhalb des jeweiligen Toleranzbereiches festgestellt wird.

Die wenigstens eine Datenmenge kann im Speicher des ID-Dokuments den Vorgaben für die logische Datenstruktur zum Speichern von biometrischen Informationen bei maschinenlesbare Reisedokumente nach ICAO Doc 9303 entsprechend (7. Fassung, 2015 oder aktuellere Fassung) gespeichert sein. In der 7. Fassung von ICAO Doc 9303 sind die Vorgaben für die logische Datenstruktur zum Speichern von biometrischen Informationen im Teil 10 geregelt. Es ist eine standardisierte logische Datenstruktur mit gemäß dieser Fassung Datengruppen 1 bis 16 bestimmt. Für jede Datengruppe wird in einem sogenannten Dokument-Sicherheitsobjekt (DSO) ein Hashwert gespeichert. Es kann vorgesehen sein, die wenigstens eine Datenmenge in einer der Datengruppen in dem Speicher des ID-Dokuments zu speichern, die gemäß ICAO Doc 9303 für zukünftige Nutzung vorgesehen sind, also nach der geltenden Fassung von ICAO Doc 9303 noch nicht durch andere Daten belegt sind.

Authentizität und Integrität der wenigstens einen Datenmenge können mittels einer elektronischen Signatur einer passiven Authentifizierung für maschinenlesbare Reisedokumente nach ICAO Doc 9303 entsprechend (7. Fassung, 2015 oder aktuellere Fassung) geschützt sein. Im Standard ICAO Doc 9303 ist in der 7. Fassung aus 2015 eine öffentliche Schlüssel-Infrastruktur für die maschinenlesbaren Reisedokumente im Teil 12 geregelt. Die Authentizität und die Integrität der im maschinenlesbaren Reisedokument gespeicherten Daten ist mittels einer passiven Authentifizierung geschützt. Dieser Sicherheitsmechanismus basiert auf digitalen Signaturen und umfasst die Elemente der öffentlichen Schlüssel-Infrastruktur (vgl. "3. Rolls and Responsibilities" in Teil 12 von ICAO Doc 9303, 7. Fassung, 2015).

Beim Identifizieren der Person können wahlweise mittels des mobilen Geräts weitere personenbezogenen Daten ausgelesen und geprüft werden, beispielweise die für maschinenlesbare Reisedokumente gemäß ICAO Doc 9303 vorgesehen Daten.

Die Referenzwertdaten können beim Identifizieren der Person unter Verwendung der Modelldaten bestimmt werden. Das Bestimmen der Referenzwertdaten kann mittels des mindestens einen Prozessors lokal im mobilen Gerät ausgeführt werden. Hierzu verfügt das mobile Gerät über eine geeignete Ausstattung an Software-Applikationen. Alternativ kann vorgesehen sein, dass die Referenzwertdaten zumindest teilweise in der externen Datenverarbeitungseinrichtung berechnet werden, mit der das mobile Gerät Daten austauschen kann. Auf diese Weise ist es ermöglicht, in Ergänzung zur in dem mobilen Gerät verfügbaren Prozessor- oder Rechenkapazität externe Rechenleistung einzubeziehen, um die Referenzwertdaten zu bestimmen. Hierzu kann vorgesehen sein, dass für die Bestimmung der Referenzwertdaten die Modelldaten vom mobilen Gerät an die externe Datenverarbeitungseinrichtung übermittelt werden.

Die Referenzwertdaten können beim Identifizieren der Person unter Verwendung der Landmarkendaten bestimmt werden. Das Bestimmen der Referenzwertdaten kann ebenso mittels des mindestens einen Prozessors lokal im mobilen Gerät ausgeführt werden. Hierzu verfügt das mobile Gerät über eine geeignete Ausstattung an Software-Applikationen. Alternativ kann vorgesehen sein, dass die Referenzwertdaten zumindest teilweise in der externen Datenverarbeitungseinrichtung berechnet werden. Auf diese Weise ist es ermöglicht, in Ergänzung zur in dem mobilen Gerät verfügbaren Prozessor- oder Rechenkapazität externe Rechenleistung einzubeziehen, um die Referenzwertdaten zu bestimmen. In diesem Fall kann vorgesehen sein, dass für die Bestimmung der Referenzwertdaten die Landmarkendaten vom mobilen Gerät an die externe Datenverarbeitungseinrichtung übermittelt werden.

Wenn die zumindest eine aus dem ID-Dokument ausgelesene Datenmenge die Referenzwertdaten nicht umfasst, werden im Prozessor des mobilen Geräts und / oder der externen Datenverarbeitungseinrichtung Informationen bereitgestellt, welche Landmarken und / oder welche geometrischen Beziehung zwischen Landmarken zum Identifizieren der Person herangezogen werden sollen, wahlweise anwendungsabhängig, so dass dann die Referenzwertdaten Vorgaben nach den Informationen entsprechend bestimmt werden. Hierzu können im Speicher des ID-Dokuments, im mobilen Gerät und / oder der externen Datenverarbeitungseinrichtung entsprechende Informations- oder Prüfdaten gespeichert sein, die beim Identifizieren auswertbar sind und insoweit den Identifizierungsprozess mitbestimmen können.

Auf dem mobilen Gerät kann eine Software-Applikation implementiert sein, die den Nutzer des mobilen Geräts beim Aufnehmen der aktuellen Bilddaten der Person unterstützt und hierbei zum Beispiel prüft, ob aufgenommene Bilddaten (schon) geeignet sind, das aktuelle dreidimensionale Modell zu berechnen oder nicht. Wenn das nicht der Fall ist, kann der Nutzer aufgefordert werden, weitere Bildaufnahmen zu machen, bis eine zur Modelberechnung geeignete Datenmenge oder -basis vorliegt. Zur Führung des Nutzers beim Aufnehmen der aktuellen Bilddaten kann ein geeignetes Benutzermenü auf einer Anzeigeeinrichtung des mobilen Geräts mittels der Software-Applikation bereitgestellt werden.

Bei dem Verfahren zum Identifizieren können die aktuellen Bilddaten für das Gesicht der Person aufgenommen werden, wenn die Person das ID-Dokument zum Identifizieren vorlegt.

Die vorangehend in Verbindung mit dem Verfahren zum Identifizieren einer Person erläuterten Ausgestaltungen können im Zusammenhang mit dem mobilen Gerät zum Identifizieren der Person anhand des biometrischen Gesichtsmerkmals entsprechend vorgesehen sein.

### Beschreibung von Ausführungsbeispielen

Im Folgenden werden weitere Ausführungsbeispiele unter Bezugnahme auf Figuren einer Zeichnung erläutert Hierbei zeigen:
- Fig. 1: eine schematische Darstellung einer Anordnung zum Identifizieren einer Person unter Verwendung eines biometrischen Gesichtsmerkmals;
- Fig. 2: eine schematische Darstellung zur Erläuterung eines Verfahrens zum Identifizieren einer Person anhand eines biometrischen Gesichtsmerkmals und
- Fig. 3: eine schematische Darstellung für einen Teil eines dreidimensionalen Modells für das Gesicht einer zu identifizierenden Person.

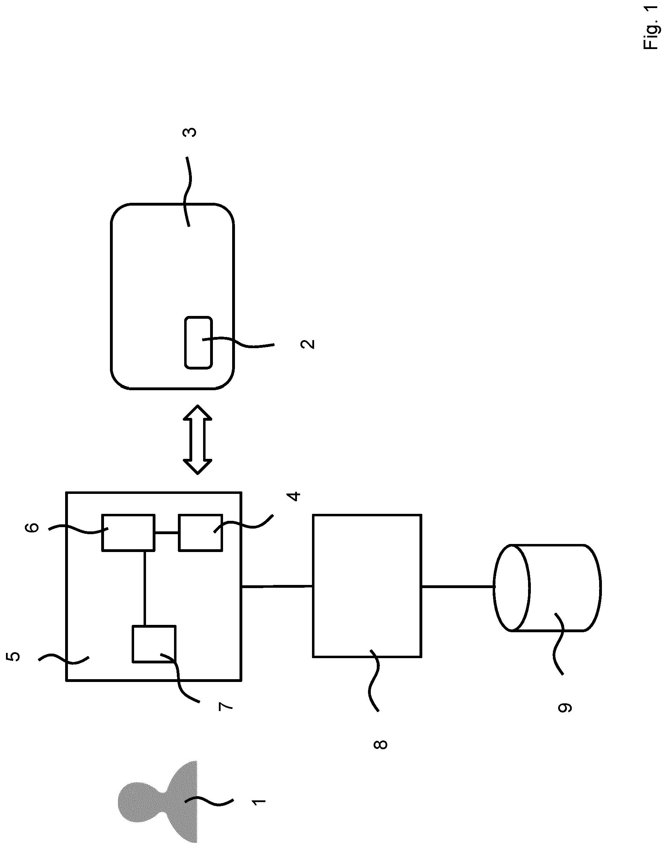

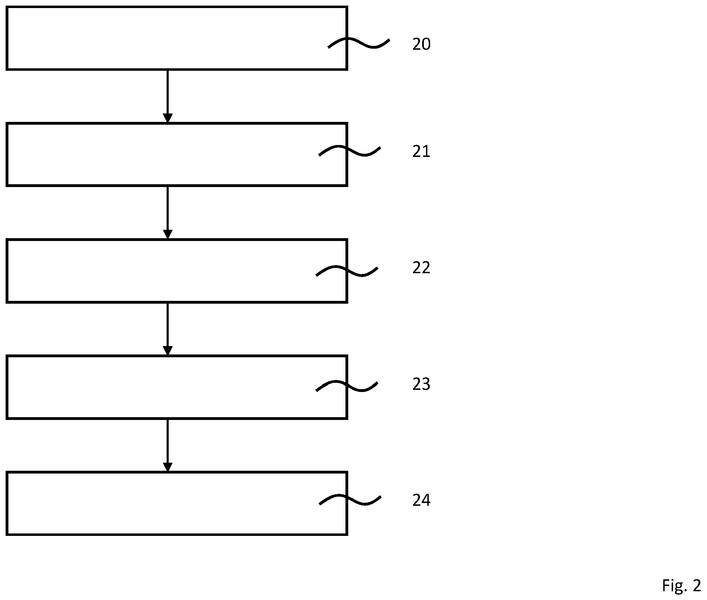

Fig. 1 zeigt eine schematische Darstellung einer Anordnung zum Identifizieren einer Person 1 mittels eines oder mehrerer biometrischer Gesichtsmerkmale. Fig. 2 zeigt eine schematische Darstellung für ein Ablaufdiagramm zur Beschreibung eines Verfahrens zum Identifizieren der Person 1.

In einem Schritt 20 werden in einem elektronischen Speicher 2 eines ID-Dokuments 3 Referenzwertdaten für die Person 1 gespeichert. Das ID-Dokument 2 kann insbesondere ein Ausweis-, Wert- oder Sicherheitsdokument sein, insbesondere ein hoheitliches Dokument, beispielsweise ein papierbasiertes und / oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte oder Firmenausweis oder anderes ID-Dokument wie Berechtigungsnachweis.

Das Speichern der Referenzwertdaten in dem Speicher 2 des ID-Dokuments 3 kann erfolgen, bevor der Speicher 2, beispielsweise ein Chip oder ein Speicherbaustein, in einen Dokumentenkörper des ID-Dokuments 3 integriert wird. Alternativ kann das Speichern der Referenzwertdaten vorgenommen werden, nachdem der Speicher 2 in dem Dokumentenkörper aufgenommen ist.

Die Referenzwertdaten betreffend ein biometrisches Gesichtsmerkmal zeigen mindestens einen Referenzwert für einen oder mehrere geometrische Parameter / geometrische Beziehungen für wenigstens zwei Landmarken zur Gesichtserkennung an. Beispielsweise kann dies den Abstand zwischen Positionen von zwei Landmarken und / oder einen Winkel zwischen Verbindungslinien zwischen jeweiligen Positionen von zwei Landmarken betreffen. Der Referenzwert wurde aus einem dreidimensionalen Referenzmodell oder einer dreidimensionalen Referenzrekonstruktion des Gesichts der Person 1 bestimmt. Vor oder während einer Personalisierung des ID-Dokuments 3 wurde also das dreidimensionale Referenzmodell für das Gesicht der Person 1 berechnet oder bestimmt. So dann werden beim Personalisieren im Speicher 2 eine oder mehrere der folgenden Datenmengen oder Datensätze gespeichert: Referenzwertdaten, welche einen Referenzwert für eine geometrische Beziehung für wenigstens zwei Landmarken der Gesichtserkennung in dem dreidimensionalen Referenzmodell für das Gesicht der Person anzeigen; Landmarkendaten, die Landmarken zur Gesichtserkennung in dem dreidimensionale Referenzmodell anzeigen und aus denen die Referenzwertdaten bestimmbar sind; und Modelldaten, die das dreidimensionale Referenzmodell repräsentierten und aus denen die Referenzwertdaten bestimmbar sind. Je nachdem welche Datenmenge(n) beim Personalisieren gespeichert wird / werden, sind zum Zwecke der Personalisierung das dreidimensionalen Referenzmodell oder hieraus dann die Landmarkendaten und / oder die Referenzwertdaten zu bestimmen.

Beim Referenzwert handelt es sich um eine Eigenschaft zur Gesichtserkennung, die aus dem dreidimensionalen Referenzmodell abgeleitet wird und insoweit ein Charakteristikum des dreidimensionalen Referenzmodells für das Gesicht der Person darstellt.

Im Verfahren zum Identifizierens der Person 1 wird im Schritt 20 zumindest eine der zuvor gespeicherten Datenmengen unter Nutzung einer Datenkommunikationseinrichtung 4 eines mobilen Geräts 5 aus dem Speicher 2 des ID-Dokuments 3 ausgelesen und in einem Prozessor 6 des mobilen Geräts 5 bereitgestellt. Hierbei wird der Speicher 2 des ID-Dokuments 3 über eine Schnittstelle des ID-Dokuments 3 direkt mit Hilfe der Datenkommunikationseinrichtung 4 des mobilen Geräts 5 ausgelesen, insbesondere mittels drahtloser Datenkommunikation, wie dies zum Beispiel für das Auslesen und Schreiben von elektronischen Daten in Verbindung mit sogenannten Chipkarten an sich bekannt ist. Die Datenkommunikationseinrichtung 4 des mobilen Geräts 5 kann hierzu zum Beispiel eine Kartenleseeinrichtung aufweisen oder an eine solche externe Kartenleseeinrichtung koppeln.

Wenn die zumindest eine ausgelesene Datenmenge die Referenzwertdaten nicht umfasst, sondern die Landmarkendaten und / oder die Modelldaten, werden die den Referenzwert anzeigenden Referenzwertdaten bestimmt, sei es lokal mittels des Prozessors und / oder einer externen Datenverarbeitungseinrichtung 8.

Im Schritt 21 werden mit Hilfe einer Bildaufnahmeeinrichtung 7, die in das mobile Gerät 5 integriert ist und beispielsweise mit einer Kamera gebildet ist, aktuelle Bilddaten für das Gesicht der zu identifizierenden Person 1 aufgenommen. Ausgehend von den aktuellen Bilddaten wird im Schritt 22 ein aktuelles dreidimensionales Modell oder eine aktuelle dreidimensionale Rekonstruktion für eine Gesichtserkennung der Person 1 bestimmt, beispielsweise als Kopfmodell. Das Berechnen des aktuellen dreidimensionalen Modells kann teilweise oder ausschließlich lokal mittels des Prozessors 6 des mobilen Geräts 5 erfolgen, welches auch mehrere Prozessoren aufweisen kann und ein oder mehrere Software-Applikationen aufweist, um notwendigen Berechnungen auszuführen. Alternativ oder ergänzend kann vorgesehen sein, das Bestimmen des aktuellen dreidimensionalen Modells unter Verwendung der aktuellen Bilddaten ganz oder teilweise in der externe Datenverarbeitungseinrichtung 8 auszuführen, die im gezeigten Beispiel an eine Datenbank 9 koppelt und eingerichtet ist, mit dem mobilen Gerät 5 Daten auszutauschen, sei es über eine kabelgebundene oder eine kabellose Datenleitung. Auf diese Weise kann für die verschiedenen Berechnungsschritte wahlweise auf ergänzende Prozessor- oder Rechnerkapazität zurückgegriffen werden.

Im Schritt 23 werden dann aus dem aktuellen dreidimensionalen Modell für das Gesicht der Person 1 Vergleichsdaten bestimmt. Die Vergleichsdaten zeigen einen Vergleichswert für den geometrischen Parameter / die geometrische Beziehung für die wenigstens zwei Landmarken der Gesichtserkennung an und sind aus dem aktuellen dreidimensionalen Modell abgeleitet oder bestimmt. Die Vergleichsdaten werden wie die Referenzwertdaten in dem Prozessor 6 des mobilen Geräts 5 bereitgestellt. Im Schritt 24 wird dann die Person 1 identifiziert, wenn mittels des Prozessors 6 des mobilen Geräts 5 bestimmt wird, dass der Vergleichswert innerhalb einer vorgegebenen Fehlertoleranz gleich dem Referenzwert ist. Auf diese Weise kann die Person 1 effizient und sicher in verschiedensten Anwendungssituationen unter Verwendung des mobilen Geräts 5 und des ID-Dokuments 3 identifiziert werden. Der Identifizierungsprozess basiert auf den Referenzwertdaten und den Vergleichsdaten, die jeweils aus einer dreidimensionalen Repräsentation oder Rekonstruktion für das Gesicht der Person 1 bestimmt sind.

Wenn die zumindest eine ausgelesene Datenmenge die Referenzwertdaten nicht umfasst, werden im Prozessor und / oder der externen Datenverarbeitungseinrichtung 8 Informationen bereitgestellt, welche Landmarken und / oder welche geometrischen Beziehung zwischen Landmarken zum Identifizieren der Person herangezogen werden sollen, so dass dann die Referenzwertdaten entsprechend bestimmt werden. Hierzu können im Speicher 2 des ID-Dokuments 3 entsprechende Informations- oder Prüfdaten gespeichert sein, die insoweit den Identifizierungsprozess mitbestimmen.

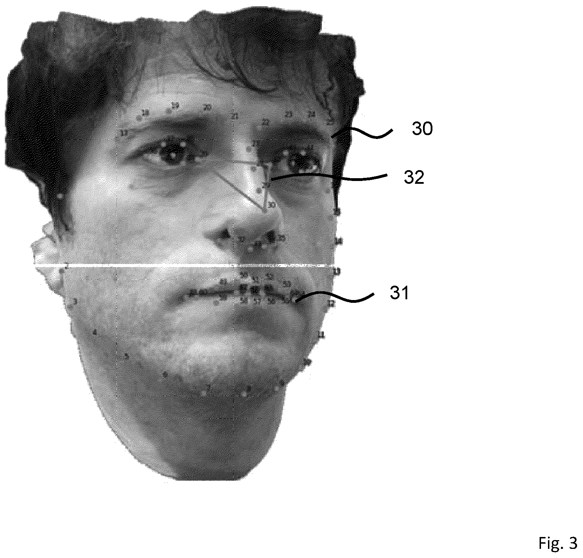

Fig. 3 zeigt eine schematische Darstellung eines Beispiels für eine Vorderansicht eines dreidimensionalen Modells für eine Person. Im Gesichtsbereich 30 ist eine Vielzahl von Landmarken 31 eingezeichnet, die jeweils Landmarken zur Gesichtserkennung bilden. Als Beispiel für geometrische Parameter betreffend ausgewählte Landmarken sind Verbindungslinien 32 zwischen der Position Augensenke links und der Position Augensenke rechts sowie der Position der Nasenspitze dargestellt. Eine oder mehrere dieser geometrischen Parameter, zum Beispiel Abstand und / oder Winkel zwischen den Verbindungslinien 32, können verwendet werden, um als Referenzwertdaten in dem ID-Dokument 3 gespeichert und dann für die Personenidentifizierung genutzt zu werden. Aufgrund der Vielzahl der Landmarken 31 können unterschiedliche Landmarken ausgewählt werden, um für diese dann einen oder mehrere geometrische Parameter / Beziehungen zu bestimmen, beispielsweise den Abstand zwischen Landmarken und / oder einen Winkel zwischen Verbindungslinien, die jeweils zwei oder mehrere Landmarken verbinden.

Das Speichern der wenigstens einen Datenmenge im ID-Dokument 3 kann den Vorgaben von ICAO Doc 9303 (7. Fassung, 2015 oder aktuellere Version) erfolgen, insbesondere dann, wenn es sich bei dem ID-Dokument 3 um ein maschinenlesbares Reisedokument handelt. Es kann aber auch vorgesehen sein, diese standardisierten Vorgaben für ein anderes ID-Dokument anzuwenden, bei dem es sich nicht um ein Reisedokument handelt, aber ein maschinenlesbares ID-Dokument.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Person
- 2: Speicher
- 3: ID-Dokument
- 4: Datenkommunikationseinrichtung
- 5: mobiles Gerät
- 6: Prozessor
- 7: Bildaufnahmeeinrichtung
- 8: externe Datenverarbeitungseinrichtung
- 9: Datenbank
- 20 ... 24: Verfahrensschritte
- 30: Gesichtsbereich
- 31: Landmarken
- 32: Verbindungslinien

## Patentansprüche

1. Verfahren zum Identifizieren einer Person anhand eines biometrischen Gesichtsmerkmals mit Hilfe eines mobilen Geräts, mit:
- Bereitstellen eines ID-Dokuments (3) mit einem Speicher (2) für elektronische Daten, wobei zum Personalisieren des ID-Dokuments (3) für eine Person, welcher das ID-Dokument (3) zugeordnet ist, in dem Speicher (2) zumindest eine der folgenden Datenmengen gespeichert ist:
- Referenzwertdaten, welche mehrere Referenzwerte für geometrische Beziehungen für wenigstens zwei Landmarken der Gesichtserkennung in einem dreidimensionalen Referenzmodell für das Gesicht der Person anzeigen,
- Landmarkendaten, die Landmarken zur Gesichtserkennung in dem dreidimensionalen Referenzmodell anzeigen und aus denen die Referenzwertdaten bestimmbar sind, und
- Modelldaten, die das dreidimensionale Referenzmodell repräsentierten und aus denen die Referenzwertdaten bestimmbar sind;
- Auslesen mindestens einer der Datenmengen aus dem Speicher (2) des ID-Dokuments (3) und Bereitstellen der Referenzwertdaten in mindestens einem Prozessor eines mobilen Geräts (5);
- Aufnehmen von aktuellen Bilddaten für das Gesicht der Person mit einer Bildaufnahmeeinrichtung (7) des mobilen Geräts (5);
- Bestimmen eines aktuellen dreidimensionalen Modells für das Gesicht der Person unter Verwendung der aktuellen Bilddaten;
- Bestimmen von Vergleichsdaten aus dem aktuellen dreidimensionalen Modell für das Gesicht der Person, wobei die Vergleichsdaten mehrere Vergleichswerte für geometrische Parameter für die wenigstens zwei Landmarken der Gesichtserkennung anzeigen, die in dem aktuellen dreidimensionalen Modell bestimmt werden, und Bereitstellen der Vergleichsdaten in dem mindestens einen Prozessor (6) des mobilen Geräts (5); und
- Identifizieren der Person, wenn mittels des mindestens einen Prozessors (6) des mobilen Geräts (5) bestimmt wird, dass wenigstens einer der Vergleichswerte innerhalb einer vorgegebenen Fehlertoleranz gleich einem entsprechenden Referenzwert ist;
**dadurch gekennzeichnet, dass** die Referenzwerte gewichtete Referenzwerte sind und beim Identifizieren der Person einer gewichteten Reihenfolge entsprechend nacheinander geprüft werden, wobei die Prüfungsreihenfolge abgebrochen wird, wenn für einen oder mehrere der Referenzwerte eine Übereinstimmung mit einem jeweils zugeordneten Vergleichswert innerhalb eines jeweiligen Toleranzbereichs festgestellt wird.

2. Verfahren nach Anspruch 1, **dadurch gekennzeichnet, dass** die wenigstens eine der Datenmenge mit Hilfe einer Datenkommunikationseinrichtung des mobilen Geräts (5), die mit dem mindestens einen Prozessor (6) verbunden ist, aus dem Speicher (2) des ID-Dokuments (3) ausgelesen werden.

3. Verfahren nach Anspruch 1 oder 2, **dadurch gekennzeichnet, dass** das aktuelle dreidimensionale Modell mittels des mindestens einen Prozessors (6) lokal im mobilen Gerät (5) bestimmt wird.

4. Verfahren nach mindestens einem der vorangehenden Ansprüche, **dadurch gekennzeichnet, dass** die Vergleichsdaten mittels des mindestens einen Prozessors (6) lokal im mobilen Gerät (5) bestimmt werden.

5. Verfahren nach mindestens einem der vorangehenden Ansprüche, **dadurch gekennzeichnet, dass** die die wenigstens zwei Landmarken der Gesichtserkennung zumindest eine der folgenden Landmarken umfassen: Position der Nasenspitze, Position Augensenke linkes Auge, Position Augensenke rechtes Auge, Position rechtes Ohr und Position linkes Ohr.

6. Verfahren nach mindestens einem der vorangehenden Ansprüche, **dadurch gekennzeichnet, dass** die geometrische Beziehung für die wenigstens zwei Landmarken der Gesichtserkennung eine Beziehung aus der folgenden Gruppe angibt: Abstand zwischen zwei Landmarken; Winkel zwischen zwei Geraden, die jeweils einer Verbindungslinie zwischen zwei Landmarken entsprechen; und geometrische Form wie Dreieck, Kreis oder Viereck.

7. Verfahren nach mindestens einem der vorangehenden Ansprüche, **dadurch gekennzeichnet, dass** als mobiles Gerät (5) ein Gerät aus der folgenden Gruppe verwendet wird: Mobiltelefon, Laptop-Computer, Tablet-Computer und Handscanner.

8. Verfahren nach mindestens einem der vorangehenden Ansprüche, **dadurch gekennzeichnet, dass** in dem Speicher (2) weitere Referenzwertdaten für ein weiteres biometrisches Gesichtsmerkmal gespeichert sind, die einen weiteren Referenzwert für eine weitere geometrische Beziehung zwischen wenigstens zwei Landmarken der Gesichtserkennung in dem dreidimensionalen Referenzmodell für das Gesicht der Person anzeigen.

9. Verfahren nach mindestens einem der vorangehenden Ansprüche, **dadurch gekennzeichnet, dass** die wenigstens eine Datenmenge im Speicher (2) des ID-Dokuments (3) den Vorgaben für die logische Datenstruktur zum Speichern von biometrischen Informationen bei maschinenlesbare Reisedokumente nach ICAO Doc 9303 entsprechend gespeichert sind.

10. Verfahren nach mindestens einem der vorangehenden Ansprüche, **dadurch gekennzeichnet, dass** Authentizität und Integrität der wenigstens einen Datenmenge mittels einer elektronischen Signatur der passiven Authentifizierung für maschinenlesbare Reisedokumente nach ICAO Doc 9303 entsprechend geschützt sind.

11. Verfahren nach mindestens einem der vorangehenden Ansprüche, **dadurch gekennzeichnet, dass** die Referenzwertdaten unter Verwendung der Modelldaten bestimmt werden.

12. Verfahren nach mindestens einem der vorangehenden Ansprüche, **dadurch gekennzeichnet, dass** die Referenzwertdaten unter Verwendung der Landmarkendaten bestimmt werden.

13. Verfahren nach mindestens einem der vorangehenden Ansprüche, **dadurch gekennzeichnet, dass** die aktuellen Bilddaten für das Gesicht der Person aufgenommen werden, wenn die Person das ID-Dokument zum Identifizieren vorlegt.

14. Mobiles Gerät (5) zum Identifizieren einer Person anhand eines biometrischen Gesichtsmerkmals, mit:
- mindestens einem Prozessor (6);
- einer Datenkommunikationseinrichtung (4) und
- einer Bildaufnahmeeinrichtung (7);
wobei das mobile Gerät (5) für Folgendes eingerichtet ist:
- Auslesen wenigstens einer Datenmenge aus dem Speicher (2) eines ID-Dokuments (3), wobei die wenigstens eine Datenmenge zum Personalisieren des ID-Dokuments (3) für eine Person, welcher das ID-Dokument (3) zugeordnet ist, in dem Speicher (2) gespeichert ist und zumindest eine der folgenden Datenmengen umfasst:
- Referenzwertdaten, welche mehrere Referenzwerte für eine geometrische Beziehung für wenigstens zwei Landmarken der Gesichtserkennung in einem dreidimensionalen Referenzmodell für das Gesicht der Person anzeigen,
- Landmarkendaten, die Landmarken zur Gesichtserkennung in dem dreidimensionalen Referenzmodell anzeigen und aus denen die Referenzwertdaten bestimmbar sind, und
- Modelldaten, die das dreidimensionale Referenzmodell repräsentierten und aus denen die Referenzwertdaten bestimmbar sind;
- Bereitstellen der Referenzwertdaten in dem mindestens einen Prozessor (6);
- Aufnehmen von aktuellen Bilddaten für das Gesicht der Person mit der Bildaufnahmeeinrichtung (7);
- Bestimmen eines aktuellen dreidimensionalen Modells für das Gesicht der Person unter Verwendung der Bilddaten;
- Bestimmen von Vergleichsdaten aus dem aktuellen dreidimensionalen Modell, wobei die Vergleichsdaten mehrere Vergleichswerte für geometrische Beziehungen zwischen den wenigstens zwei Landmarken der Gesichtserkennung in dem aktuellen dreidimensionalen Modell für das Gesicht anzeigen, und Bereitstellen der Vergleichsdaten in dem mindestens einen Prozessor (6); und
- Identifizieren der Person, wenn mittels des mindestens einen Prozessors (6) bestimmt wird, dass wenigstens einer der Vergleichswerte innerhalb einer vorgegebenen Fehlertoleranz gleich einem entsprechenden Referenzwert ist;
**dadurch gekennzeichnet, dass** die Referenzwerte gewichtete Referenzwerte sind und beim Identifizieren der Person einer gewichteten Reihenfolge entsprechend nacheinander geprüft werden, wobei die Prüfungsreihenfolge abgebrochen wird, wenn für einen oder mehrere der Referenzwerte eine Übereinstimmung mit einem jeweils zugeordneten Vergleichswert innerhalb eines jeweiligen Toleranzbereichs festgestellt wird.

## Claims

1. Method for identifying a person on the basis of a biometric facial feature with the aid of a mobile device, comprising:
- providing an ID document (3) with a memory (2) for electronic data, wherein, in order to personalize the ID document (3) for a person to whom the ID document (3) is assigned, at least one of the following data sets is stored in the memory (2):
- reference value data which indicate a plurality of reference values for geometric relationships for at least two landmarks of the facial recognition in a three-dimensional reference model for the face of the person,
- landmark data which indicate landmarks for facial recognition in the three-dimensional reference model and from which the reference value data can be determined, and
- model data which represent the three-dimensional reference model and from which the reference value data can be determined;
- reading at least one of the data sets from the memory (2) of the ID document (3) and providing the reference value data in at least one processor of a mobile device (5);
- recording current image data for the person's face using an image recording device (7) of the mobile device (5);
- determining a current three-dimensional model for the person's face using the current image data;
- determining comparison data from the current three-dimensional model for the person's face, wherein the comparison data indicate a plurality of comparison values for geometric parameters for the at least two landmarks of the facial recognition which are determined in the current three-dimensional model, and providing the comparison data in the at least one processor (6) of the mobile device (5); and
- identifying the person if it is determined by means of the at least one processor (6) of the mobile device (5) that at least one of the comparison values is equal to a corresponding reference value within a predefined error tolerance;
**characterized in that** the reference values are weighted reference values and, when identifying the person, are checked in accordance with a weighted sequence one after the other, wherein the checking sequence is aborted if a correspondence with a respectively assigned comparison value within a respective tolerance range is established for one or more of the reference values.

2. Method according to Claim 1, **characterized in that** the at least one of the data sets is read from the memory (2) of the ID document (3) with the aid of a data communication device of the mobile device (5) which is connected to the at least one processor (6).

3. Method according to Claim 1 or 2, **characterized in that** the current three-dimensional model is determined locally in the mobile device (5) by means of the at least one processor (6).

4. Method according to at least one of the preceding claims, **characterized in that** the comparison data are determined locally in the mobile device (5) by means of the at least one processor (6).

5. Method according to at least one of the preceding claims, **characterized in that** the at least two landmarks of the facial recognition comprise at least one of the following landmarks: position of the tip of the nose, position of the eye depression of the left eye, position of the eye depression of the right eye, position of the right ear and position of the left ear.

6. Method according to at least one of the preceding claims, **characterized in that** the geometric relationship for the at least two landmarks of the facial recognition indicates a relationship from the following group: distance between two landmarks; angle between two straight lines which each correspond to a connecting line between two landmarks; and geometric shape such as triangle, circle or square.

7. Method according to at least one of the preceding claims, **characterized in that** a device from the following group is used as mobile device (5): mobile telephone, laptop computer, tablet computer and hand scanner.

8. Method according to at least one of the preceding claims, **characterized in that** further reference value data for a further biometric facial feature are stored in the memory (2) which indicate a further reference value for a further geometric relationship between at least two landmarks of the facial recognition in the three-dimensional reference model for the person's face.

9. Method according to at least one of the preceding claims, **characterized in that** the at least one data set is stored in the memory (2) of the ID document (3) in accordance with the specifications for the logical data structure for storing biometric information in the case of machine-readable travel documents according to ICAO Doc 9303.

10. Method according to at least one of the preceding claims, **characterized in that** authenticity and integrity of the at least one data set are correspondingly protected by means of an electronic signature of the passive authentication for machine-readable travel documents according to ICAO Doc 9303.

11. Method according to at least one of the preceding claims, **characterized in that** the reference value data are determined using the model data.

12. Method according to at least one of the preceding claims, **characterized in that** the reference value data are determined using the landmark data.

13. Method according to at least one of the preceding claims, **characterized in that** the current image data for the person's face are recorded when the person presents the ID document for identification.

14. Mobile device (5) for identifying a person on the basis of a biometric facial feature, comprising:
- at least one processor (6);
- a data communication device (4) and
- an image recording device (7);
wherein the mobile device (5) is configured for the following:
- reading at least one data set from the memory (2) of an ID document (3), wherein the at least one data set is stored in the memory (2) for personalizing the ID document (3) for a person to whom the **ID** document (3) is assigned and comprises at least one of the following data sets:
- reference value data which indicate a plurality of reference values for a geometric relationship for at least two landmarks of the facial recognition in a three-dimensional reference model for the person's face,
- landmark data which indicate landmarks for facial recognition in the three-dimensional reference model and from which the reference value data can be determined, and
- model data which represent the three-dimensional reference model and from which the reference value data can be determined;
- providing the reference value data in the at least one processor (6);
- recording current image data for the person's face using the image recording device (7);
- determining a current three-dimensional model for the person's face using the image data;
- determining comparison data from the current three-dimensional model, wherein the comparison data indicate a plurality of comparison values for geometric relationships between the at least two landmarks of the facial recognition in the current three-dimensional model for the face, and providing the comparison data in the at least one processor (6); and
- identifying the person if it is determined by means of the at least one processor (6) that at least one of the comparison values is equal to a corresponding reference value within a predefined error tolerance;
**characterized in that** the reference values are weighted reference values and, when identifying the person, are checked in accordance with a weighted sequence one after the other, wherein the checking sequence is aborted if a correspondence with a respectively assigned comparison value within a respective tolerance range is established for one or more of the reference values.

## Revendications

1. Procédé d'identification d'une personne au moyen d'une caractéristique faciale biométrique à l'aide d'un appareil mobile, comprenant :
- la fourniture d'un document d'identification (3) doté d'une mémoire (2) pour les données électroniques, dans lequel afin de personnaliser le document d'identification (3) pour une personne à laquelle le document d'identification (3) est attribué, au moins un des ensembles de données suivants est mémorisé dans la mémoire (2) :
- des données de valeurs de référence, qui affichent plusieurs valeurs de référence pour les relations géométriques d'au moins deux points de repère de reconnaissance faciale dans un modèle de référence tridimensionnel du visage de la personne ;
- des données de points de repère, qui affichent les points de repère de reconnaissance faciale dans le modèle de référence tridimensionnel et à partir desquels les données de valeurs de référence peuvent être déterminées ;
- des données de modèle, qui représentent le modèle de référence tridimensionnel et à partir desquelles les données de valeurs de référence peuvent être déterminées ;
- la lecture d'au moins un des ensembles de données depuis la mémoire (2) du document d'identification (3) et la fourniture des données de valeurs de référence à au moins un processeur d'un appareil mobile (5) ;
- l'enregistrement des données d'image actuelles du visage de la personne à l'aide d'un dispositif d'acquisition d'images (7) de l'appareil mobile (5) ;
- la détermination d'un modèle tridimensionnel actuel du visage de la personne à partir des données d'image actuelles ;
- la détermination de données de comparaison à partir du modèle tridimensionnel actuel pour le visage de la personne, dans lequel les données de comparaison indiquent plusieurs valeurs de comparaison pour les paramètres géométriques d'au moins deux points de repère de reconnaissance faciale, qui sont déterminés dans le modèle tridimensionnel actuel et la fourniture des données de comparaison à au moins un processeur (6) de l'appareil mobile (5) ; et
- l'identification de la personne lorsque, à l'aide d'au moins un processeur (6) de l'appareil mobile (5), il est déterminé qu'au moins une des valeurs de comparaison est égale à une valeur de référence correspondante, dans les limites d'une tolérance d'erreur prescrite,
**caractérisé en ce que** les valeurs de référence sont des valeurs de référence pondérées et sont vérifiées séquentiellement, par ordre de pondération, lors de l'identification de la personne, dans lequel la séquence de vérification est interrompue si une correspondance est trouvée pour une ou plusieurs valeurs de référence avec une valeur de comparaison correspondante dans une plage de tolérance respective.

2. Procédé selon la revendication 1, **caractérisé en ce qu'**au moins un des ensembles de données est lu à partir de la mémoire (2) du document d'identification (3) à l'aide d'un dispositif de communication de données de l'appareil mobile (5), qui est connecté à au moins un processeur (6).

3. Procédé selon la revendication 1 ou 2, **caractérisé en ce que** le modèle tridimensionnel actuel est déterminé localement dans l'appareil mobile (5) à l'aide d'au moins un processeur (6).

4. Procédé selon au moins une des revendications précédentes, **caractérisé en ce que** les données de comparaison sont déterminées localement dans l'appareil mobile (5) au moyen d'au moins un processeur (6).

5. Procédé selon au moins une des revendications précédentes, **caractérisé en ce que** les au moins deux points de repère pour la reconnaissance faciale comprennent au moins un des éléments suivants : position de la pointe du nez, position du creux de l'œil gauche, position du creux de l'œil droit, position de l'oreille droite et position de l'oreille gauche.

6. Procédé selon au moins une des revendications précédentes, **caractérisé en ce que** la relation géométrique entre les au moins deux points de repère pour la reconnaissance faciale est une relation appartenant au groupe suivant : distance entre deux points de repère ; angle entre deux droites, qui correspondent respectivement à une ligne de liaison entre deux points de repère ; et forme géométrique telle qu'un triangle, un cercle ou un quadrilatère.

7. Procédé selon au moins une des revendications précédentes, **caractérisé en ce que** l'appareil mobile (5) est un dispositif appartenant au groupe suivant : téléphone mobile, ordinateur portable, tablette et scanner portable.

8. Procédé selon au moins une des revendications précédentes, **caractérisé en ce que** la mémoire (2) mémorise des données de valeur de référence supplémentaires pour une autre caractéristique faciale biométrique, qui affichent une valeur de référence supplémentaire pour une autre relation géométrique entre au moins deux points de repère de la reconnaissance faciale dans le modèle de référence tridimensionnel du visage de la personne.

9. Procédé selon au moins une des revendications précédentes, **caractérisé en ce que** au moins un ensemble de données dans la mémoire (2) du document d'identification (3) sont mémorisés en conséquence conformément aux spécifications de la structure de données logique pour la mémorisation d'informations biométriques dans le cas de documents de voyage lisibles par machine, conformes au document 9303 de l'ICAO.

10. Procédé selon au moins une des revendications précédentes, **caractérisé en ce que** l'authenticité et l'intégrité d'au moins un ensemble de données sont protégées par une signature électronique pour l'authentification passive des documents de voyage lisibles par machine, conformes au document 9303 de l'ICAO.

11. Procédé selon au moins une des revendications précédentes, **caractérisé en ce que** les données de valeur de référence sont déterminées en utilisant les données du modèle.

12. Procédé selon au moins une des revendications précédentes, **caractérisé en ce que** les données de valeur de référence sont déterminées en utilisant les données de points de repère.

13. Procédé selon au moins une des revendications précédentes, **caractérisé en ce que** les données d'image actuelles du visage de la personne sont enregistrées lorsque la personne présente le document d'identification pour identification.

14. Dispositif mobile (5) d'identification d'une personne par reconnaissance faciale biométrique, comprenant :
- au moins un processeur (6) ;
- un dispositif de communication de données (4) ; et
- un dispositif d'acquisition d'images (7),
dans lequel l'appareil mobile (5) est configuré pour :
- la lecture d'au moins un ensemble de données depuis la mémoire (2) d'un document d'identification (3), dans lequel le au moins un ensemble de données pour personnaliser le document d'identification (3) d'une personne, à laquelle le document d'identification (3) est attribué, est mémorisé dans la mémoire (2) et comprend au moins un des ensembles de données suivants :
- des données de valeurs de référence, qui affichent plusieurs valeurs de référence pour les relations géométriques d'au moins deux points de repère de reconnaissance faciale dans un modèle de référence tridimensionnel du visage de la personne ;
- des données de points de repère, qui affichent les points de repère de reconnaissance faciale dans le modèle de référence tridimensionnel et à partir desquels les données de valeurs de référence peuvent être déterminées ;
- des données de modèle, qui représentent le modèle de référence tridimensionnel et à partir desquelles les données de valeurs de référence peuvent être déterminées ;
- la fourniture des données de valeurs de référence dans au moins un processeur (6) ;
- l'enregistrement des données d'image actuelles du visage de la personne à l'aide du dispositif d'enregistrement d'images (7) ;
- la détermination d'un modèle tridimensionnel réel du visage de la personne à partir des données d'image ;
- la détermination de données de comparaison à partir du modèle tridimensionnel actuel pour le visage de la personne, dans lequel les données de comparaison indiquent plusieurs valeurs de comparaison pour les paramètres géométriques d'au moins deux points de repère de reconnaissance faciale, qui sont déterminés dans le modèle tridimensionnel actuel et la fourniture des données de comparaison à au moins un processeur (6); et
- l'identification de la personne lorsque, à l'aide d'au moins un processeur (6), il est déterminé qu'au moins une des valeurs de comparaison est égale à une valeur de référence correspondante, dans les limites d'une tolérance d'erreur prescrite,
**caractérisé en ce que** les valeurs de référence sont des valeurs de référence pondérées et sont vérifiées séquentiellement, par ordre de pondération, lors de l'identification de la personne, dans lequel la séquence de vérification est interrompue si une correspondance est trouvée pour une ou plusieurs valeurs de référence avec une valeur de comparaison correspondante dans une plage de tolérance respective.
